# FASCICULE DE BREVET EUROPEEN

(11) **EP 0 823 772 B1**
(45) Date de publication et mention de la délivrance du brevet: **23.10.2002**
(21) Numéro de dépôt: 97401869.9
(22) Date de dépôt: 04.08.1997
(51) Int. Cl.: H02M 7/48, H02M 3/07

(54) **Dispositif électronique de conversion de l'énergie électrique**
Elektronisches Gerät zum Umwandlen elektrischer Energie
Electronic device for conversion of electric energy

(30) Priorité: 09.08.1996 FR 9610047
(43) Date de publication de la demande: 11.02.1998
(73) Titulaire: GEC ALSTHOM TRANSPORT SA, 75116 Paris (FR)
(72) Inventeur: Carrere, Philippe, 75015 Paris (FR); Lavieville, Jean-Paul, 91190 Gif sur Yvette (FR); Meynard, Thierry, 31500 Toulouse (FR); Thomas Jean-Luc, 77810 Thomery (FR)
(74) Mandataire: Gosse, Michel

(56) Documents cités:
- EP-A- 0 720 282
- FR-A- 2 679 715

## Description

La présente invention concerne les dispositifs électroniques de conversion de l'énergie électrique du type décrit dans la demande de brevet FR - 2 679 715 A1 et une installation d'alimentation en faisant usage.

Le convertisseur décrit dans cette demande de brevet est illustré, à titre d'exemple, par la figure 1 ci-annexée. Il comprend essentiellement, entre une source de tension SE et une source de courant C, une pluralité de cellules de commutation commandables CL1, CL2..., CLn, chacune ayant deux interrupteurs T1, T'1; T2, T'2...; Tn, T'n, avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule CL1 étant connectée à ladite source de courant C, tandis que la paire de pôles aval d'une dernière cellule CLn est connectée à ladite source de tension SE, ce convertisseur comprenant encore un condensateur C1, C2..., Cn, pour chaque cellule, sauf que celui de la dernière peut être omis quand ladite source de tension SE est apte à en jouer le rôle, connecté entre les deux pôles de la paire de pôles aval de la cellule, ainsi que des moyens de commande (non représentés) régissant le fonctionnement nominal du convertisseur en agissant sur les interrupteurs des cellules successives de sorte que les deux interrupteurs d'une même cellule soient toujours respectivement dans des états de conduction opposés (ce qui est illustré par des liaisons de commande telles que lc1), de sorte que, en réponse à un signal de commande de cellule fourni par lesdits moyens de commande, l'un des deux interrupteurs d'une même cellule soit successivement dans un premier état de conduction, puis dans un second état de conduction durant une période de découpage du convertisseur cycliquement répétée, et de sorte que, en réponse à des signaux de commande de cellules identiques mais décalés dans le temps d'une fraction de ladite période de découpage du convertisseur, les interrupteurs des cellules successives aient respectivement le même fonctionnement, mais décalé dans le temps de ladite fraction de période.

De préférence, ladite fraction de période est égale à l'inverse du nombre n de cellules, soit 2π/n, ce qui est optimal en ce qui concerne les harmoniques engendrées sur la sortie et permet un équilibrage naturel des tensions de charge des condensateurs du convertisseur. Un autre décalage est cependant concevable, de même que des décalages différents entre les divers étages.

Dans un tel convertisseur, les condensateurs successifs C1, C2..., Cn ont des tensions de charge moyennes respectivement croissantes, la tension de charge moyenne du condensateur associé à chacune desdites cellules étant égale au produit d'une tension VE issue de ladite source de tension SE, de l'inverse du nombre de cellules du convertisseur et du rang de la cellule, soit VE/3, 2VE/3, VE, lorsque n = 3, c'est-à-dire lorsque le convertisseur a trois cellules seulement.

Bien entendu, ce qui précède s'applique pour d'autres valeurs de n, du moment qu'il y en a deux au moins, pour plus de trois cellules en particulier.

Dans ce qui suit on dénommera convertisseur multiniveaux un convertisseur répondant à la description qui précède.

Un des objets de la présente invention est de faire en sorte que, dans un tel convertisseur multiniveaux, la charge de chaque condensateur reste conforme à ce qui vient d'être indiqué, malgré les inévitables déviations par rapport aux conditions nominales de fonctionnement.

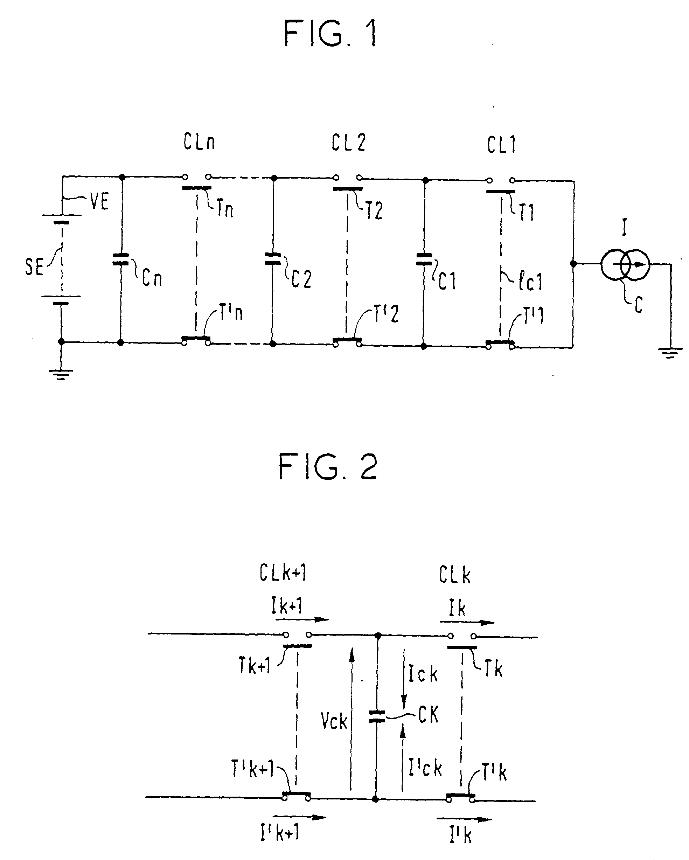

Pour examiner plus facilement comment doit nominalement évoluer la charge d'un des condensateurs d'un convertisseur multiniveaux conforme à ce qui précède, on se référera à la figure 2 qui représente une cellule de commutation quelconque CLk, avec ses interrupteurs Tk, T'k, le condensateur Ck associé à cette cellule, ainsi que la cellule suivante CLk+1, avec ses interrupteurs Tk+1, T'k+1.

Compte tenu du couplage entre les interrupteurs de chaque cellule, Tk, T'k ; Tk+1, T'k+1, l'ensemble de deux cellules imbriquées Tk-Tk+1 représenté à la figure 2 possède quatre états :
a) un premier état où, Tk et Tk+1 étant bloqués, la tension de charge de Ck n'évolue pas ;
b) un deuxième état où, Tk et Tk+1 étant conducteurs, la tension de charge de Ck n'évolue pas non plus, parce qu'alors T'k et T'k+1 sont bloqués ;
c) un troisième état où, Tk étant conducteur et Tk+1 bloqué, la source de courant C impose un courant Ik égal à I à travers Tk, alors que le courant I'k vers T'k est nul. L'état de Tk+1 impose un courant Ik+1 nul, alors que le courant I'k+1 est égal à I, tandis que le courant I'ck dans le condensateur Ck est égal à I ;
d) un quatrième état où, Tk étant bloqué et Tk+1 conducteur, la source de courant C impose un courant I'k égal à I à travers T'k, alors que le courant Ik à travers Tk est nul. L'état de Tk+1 impose un courant Ik+1 égal à I, alors que le courant I'k+1 est nul, tandis que le courant Ick dans le condensateur Ck est égal à I.

Les courants I'ck = I'k+1 et Ick = Ik+1 apportent au condensateur Ck des charges additionnelles opposées, dans les troisième et quatrième états ci-dessus ; on dira que les premières sont négatives et les secondes positives. Les courants correspondant à ces deux états sont imposés par la source de courant. Si la source de courant est rigoureusement continue, toutes choses égales par ailleurs, les courants imposés par la source de courant dans les phases c) et d) sont les mêmes et de sens opposés, à tout instant, au long des intervalles de conduction de Tk et Tk+1 (nominalement égaux et décalés dans le temps, comme indiqué plus haut). Cela entraîne que la charge de Ck, modifiée négativement puis positivement de quantités égales, ne varie pas au cours d'une période de découpage du convertisseur.

Dans un système idéal (source de courant parfaite, impédance infinie), les courants Ick et I'ck sont déterminés par la source de courant. De manière plus concrète, lorsque l'impédance de la source de courant n'est pas infinie, le courant de la source de courant dépend de la tension à ses bornes et donc des tensions Vck des condensateurs. S'il advient que la tension de charge Vck soit, par exemple, trop élevée, par rapport à sa valeur nominale VE.k/n, quelle qu'en soit la raison, il en résultera un courant de décharge I'ck tendant à être plus fort et un courant de charge Ick tendant à être plus faible que ce qu'ils seraient nominalement, ce qui tendra à ramener la charge du condensateur Ck à ce qu'elle devrait être. Ceci explique que le fonctionnement du convertisseur multiniveaux soit stable et permette des variations d'amplitude, dans les deux sens, tant du côté de la source de tension que du côté de la source de courant. On verra par la suite que cela soulève néanmoins des problèmes en termes de dynamique.

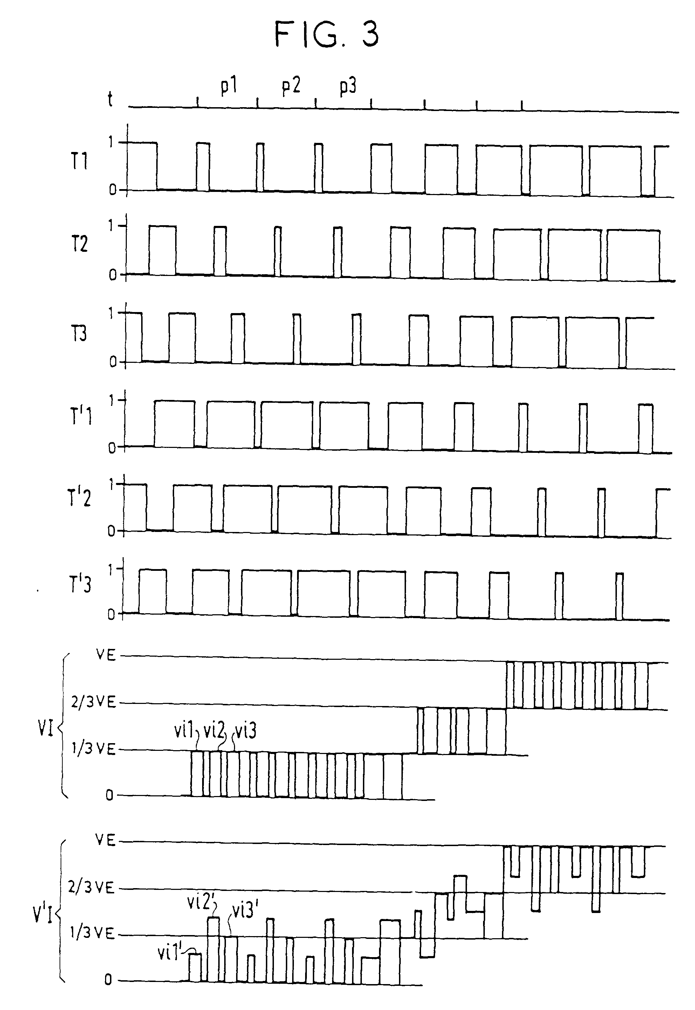

La figure 3 donne un exemple de fonctionnement du convertisseur multiniveaux conforme aux figures 1 et 2, dans le cas où n = 3 ; on y applique une commande du type de la modulation PWM, en vue de la fourniture à la source de courant C d'une tension alternative modulée sinusoïdalement, c'est-à-dire que, durant des périodes successives p1, p2, p3... de fonctionnement du convertisseur (ligne t), les interrupteurs T1, T2, T3 sont successivement conducteurs pendant des intervalles de durée variant selon une onde de modulation de la tension de sortie, dite ci-après modulante. Les interrupteurs correspondants T'1, T'2, T'3 sont à chaque instant dans la position opposée.

Bien entendu d'autres modes de modulation du fonctionnement des interrupteurs permettent, comme il est bien connu, d'obtenir le même résultat. Bien entendu encore, le convertisseur peut tout aussi bien servir à fournir à la source de courant C toute autre forme d'onde ou une tension continue régulée.

On considérera d'abord une période pi de fonctionnement du convertisseur. Au cours de celle-ci, lorsque l'un des interrupteurs T1, T2, T3 est conducteur, les deux autres sont bloqués ; pour chaque ensemble de deux cellules et le condensateur compris entre elles, cela correspond aux états c) et d) décrits plus haut, dans lesquels le condensateur reçoit successivement des charges additionnelles négatives et des charges additionnelles positives, dont la valeur totale est nominalement nulle. On remarquera de plus que, lorsque les cellules imbriquées CL1-CL2 sont dans l'état d), les cellules imbriquées CL2-CL3 sont dans l'état c), de sorte que le condensateur C1 reçoit des charges additionnelles positives par le même courant qui fournit des charges additionnelles négatives au condensateur C2.

La figure 3 illustre additionnellement et à titre d'exemple le fonctionnement du convertisseur multiniveaux dans des périodes p2, p3, etc...,au cours desquelles les durées de conduction des interrupteurs T1, T2, T3 se raccourcissent, puis s'allongent jusqu'à dépasser 1/3 de période, se recouvrant alors. La ligne VI représente ce que serait idéalement la tension transmise à la source de courant, notamment si les condensateurs avaient une capacité telle que les charges additionnelles considérées ne modifiaient sensiblement pas la tension à leurs bornes. La tension VI est exprimée en fractions de la tension VE de la source de tension SE, en-prenant comme référence de tension le pôle négatif de la source de tension SE. On voit que cette tension VI contient, d'une part, un fondamental important à la fréquence de la modulante et, d'autre part, des harmoniques d'amplitudes plus faibles à des fréquences supérieures à la fréquence de découpage, ou fréquence de fonctionnement du convertisseur, qui peuvent être facilement éliminées par un filtre passe-bas. Ce courant étant variable, son intégration par un élément inductif quelconque contenu dans la source de courant mène à ce que le convertisseur fournisse à la source de courant un courant alternatif d'allure sinusoïdale dont la période est égale à celle du fondamental de la tension de sortie.

Le courant variant sinusoïdalement, les états c) et d) envisagés plus haut n'apporteront pas des charges additionnelles égales aux condensateurs du convertisseur, puisqu'entre ces deux états, le courant aura eu le temps de varier. Cette variation ne sera négligeable que si la période de fonctionnement des interrupteurs est nettement supérieure à la fréquence de la modulante.

Par ailleurs, il faut s'attendre à ce que le courant alternatif fourni à la source de courant ne soit pas strictement sinusoïdal, mais distordu de façon asymétrique. De même, des écarts de niveaux dans les signaux de commande ou dans les signaux les engendrant, ou encore les différences de temps de commutation entre les divers interrupteurs traversés, rendront inévitablement inégales les durées de conduction des interrupteurs sur une période de fonctionnement du convertisseur, ou décaleront dans le temps les phases de conduction des interrupteurs, ou encore déséquilibreront les courants de charge et de décharge des condensateurs. D'une manière générale, par conséquent, on ne peut garantir en pratique, dans un convertisseur multiniveaux du type décrit, le respect des conditions nominales de fonctionnement, telles qu'elles ont été initialement décrites. Or, un écart de charge additionnelle persistant conduit à un écart dans un sens ou dans l'autre de la charge d'un condensateur, donc de sa tension de charge moyenne, donc aussi à une distorsion, à la fréquence de fonctionnement du convertisseur, de la tension fournie à la source de courant.

Cet effet est illustré par le tracé VI' de la figure 3, qui est semblable au tracé VI, à cela près que, le condensateur C1 (figure 1) étant supposé chargé sous une tension plus faible que sa tension de charge nominale, au lieu de fournir des impulsions vi1, vi2, vi3 d'amplitude constante, le convertisseur fournit des impulsions, telles que vi1', d'amplitude réduite (l'échelle est exagérée pour une meilleure lisibilité), lorsque le condensateur C1 fournit à la source de courant C sa propre tension de charge, et des impulsions, telles que vi2', d'amplitude accrue, lorsque le condensateur C1 soustrait sa propre tension de celle qui est fournie à la source de courant C, ainsi que des impulsions, telles que vi3', d'amplitude inchangée, lorsque le condensateur C1 est hors circuit. On voit aisément que, dans le signal VI', cela apporte une composante perturbatrice à ladite fréquence de découpage du convertisseur.

Une telle composante perturbatrice n'existe pas quand les condensateurs sont chargés à leurs tensions nominales respectives. Lorsqu'elle apparaît, elle est généralement nuisible.

Mais, surtout, les tensions auxquelles sont soumis les interrupteurs ne seront alors plus sensiblement égales à la différence des tensions de charge nominales de deux condensateurs adjacents, c'est-à-dire à la valeur de la tension de la source de tension divisée par le nombre d'étages du convertisseur. Cela peut mettre en danger ces interrupteurs.

Bien entendu, comme mentionné précédemment, les écarts de charge des condensateurs tendent spontanément à se résorber, mais ce processus prend du temps.

Ce processus spontané est mis en oeuvre via la source de courant. Il est donc ralenti lorsque le courant de la source de courant est réduit.

Il est connu de la demande de brevet EP 0 720 282 déposée par la demanderesse de remédier à ces inconvénients en proposant un convertisseur multiniveaux dans lequel on assure sensiblement le maintient de la charge moyenne de chacun des condensateurs du convertisseur à sa valeur nominale en évaluant, par des moyens d'évaluation, la tension de charge moyenne de chacun des condensateurs, en constatant l'écart éventuel entre la tension de charge moyenne évaluée et la tension moyenne nominale des condensateurs, et en commandant en conséquence un couplage temporaire entre deux condensateurs afin de neutraliser l'écart.

Un but de la présente invention est de proposer une solution alternative à cette solution de l'art antérieur en proposant un convertisseur multiniveaux dans lequel la charge moyenne de chacun des condensateurs du convertisseur est maintenue sensiblement à sa valeur nominale.

Le convertisseur multiniveaux de la présente invention est défini par les caractéristiques de la revendication 1.

En reprenant maintenant la définition du convertisseur multiniveau donnée au début de ce texte, il convient de souligner que le fonctionnement nominal du convertisseur prévoit que ses différents étages accomplissent chacun un même cycle de fonctionnement, dans une période de découpage du convertisseur ou période de découpage, mais avec un décalage dans le temps d'une fraction de cette période, de préférence égale à 2π/n, 2π représentant la période de découpage du convertisseur et n étant le nombre d'étages. En se tournant ensuite vers la figure 3, on voit que, au cours d'une période de découpage du convertisseur (p1, p2, p3...), les étages du convertisseur produisent des échelons de tension égaux (vi1, vi2, vi3) dont la sommation fournit une valeur constante. En d'autres termes, le signal de sortie est échantillonné sur la base de la période de découpage du convertisseur, divisée par le nombre d'étages.

Dans le cas où les interrupteurs utilisés sont réalisés à l'aide de composants de grande puissance relativement lents, tels que des GTO, la période de découpage du convertisseur est relativement longue et introduit une constante de temps relativement longue dans la réponse à toute commande soudaine de changement de marche du convertisseur. La présente invention permet également dans ce cas de réduire une telle constante de temps.

Selon l'invention, le convertisseur multiniveaux comprend des moyens de commande complémentaires arrangés pour pouvoir modifier sur commande la position dans le temps dudit premier état de conduction d'une ou plusieurs cellules.

Dans une première forme de mise en oeuvre de l'invention, ladite modification de la position dans le temps dudit premier état de conduction d'une ou plusieurs cellules s'effectue par avance ou retard de ce premier état de conduction, sans changement dans l'ordre de fonctionnement des cellules du convertisseur.

Un tel agencement permet, en modifiant la position dans le temps dudit premier état de conduction d'une ou plusieurs cellules, de causer une variation de la tension appliquée à ladite source de courant, c'est-à-dire déjà une variation de l'énergie transférée à la source de courant, mais aussi d'induire une variation correspondante du courant de la source de courant et, par conséquent une variation de charge du ou des condensateurs affectés par cette variation de courant.

Selon une deuxième forme de mise en oeuvre de l'invention, ladite modification de la position dans le temps dudit premier état de conduction d'une ou plusieurs cellules comprend un changement dans l'ordre de fonctionnement des cellules du convertisseur au cours d'une période de découpage du convertisseur, visant à regrouper le fonctionnement des étages du convertisseur manifestant des écarts de charge de même sens.

Une telle modification fait apparaître, une composante perturbatrice globale dans laquelle les écarts de même sens se renforcent et cela augmente l'efficacité du processus de résorption spontanée des écarts de charge des condensateurs du convertisseur.

Selon une caractéristique additionnelle de l'invention, une charge de rééquilibrage est connectée en parallèle sur ladite source de courant, sous la forme d'un circuit résonnant série accordé sur la fréquence de découpage du convertisseur, ceci afin de d'augmenter le courant résultant de ladite composante perturbatrice globale.

Le convertisseur multiniveaux comprend de préférence des moyens pour constater, pour chacun desdits condensateurs, un écart éventuel entre une tension de charge moyenne évaluée et une tension de charge moyenne nominale de ce condensateur, ainsi que des moyens de commande complémentaires modifiant la position dans le temps dudit premier état de conduction d'une ou plusieurs cellules du convertisseur dans un sens tel que ledit écart constaté soit réduit.

Selon une forme de réalisation conforme à ladite première forme de mise en oeuvre de l'invention, le convertisseur multiniveaux comprend des moyens pour constater, pour chacun desdits condensateurs, un écart éventuel entre la tension de charge moyenne évaluée et la tension de charge moyenne nominale de ce condensateur, ainsi qu'un dispositif de commande complémentaires modifiant la position dans le temps dudit premier état de conduction de la cellule du convertisseur contenant ce condensateur dans un sens tel que ledit écart constaté soit réduit.

Selon cette forme de réalisation, lesdits moyens de constation d'écart comprennent des moyens pour recevoir la valeur de la tension de la source de tension, le rang de l'étage et le nombre d'étages, pour déterminer ce que doit être en conséquence la tension de charge nominale de chaque condensateur dans une période de fonctionnement du convertisseur, ledit écart étant alors constaté, pour chaque condensateur du convertisseur, par des moyens de comparaison soustrayant ladite tension moyenne évaluée de ladite tension de charge nominale de ce condensateur.

Avantageusement, ladite tension moyenne évaluée d'un condensateur est fournie par des moyens d'évaluation comprenant un réseau voltmétrique connecté entre les deux bornes du condensateur.

En variante, ladite tension moyenne évaluée d'un condensateur est fournie par des moyens d'évaluation comprenant un réseau voltmétrique connecté entre les deux bornes d'un interrupteur de la cellule comprenant ce condensateur.

Selon une autre variante, lesdits moyens d'évaluation de la tension aux bornes d'un condensateur comprennent un réseau voltmétrique connecté entre les deux bornes de la source de courant.

De préférence, chacun desdits dispositifs de commande complémentaires reçoit, outre ledit signal d'écart, une mesure du courant imposé par ladite souce de courant et une constante exprimant la capacité d'un desdits condensateurs qui lui est associé, et calcule en conséquence une modification de la position dans le temps dudit premier état de conduction de la cellule associée à ce condensateur telle qu'elle engendre dans ce condensateur une charge complémentaire contribuant à compenser ledit écart de charge.

De préférence encore, chacun desdits dispositifs de commande complémentaires reçoit aussi un signal de modulation et modifie en conséquence la durée dudit premier état de conduction de la cellule associée à ce condensateur, de sorte que, tous lesdits dispositifs de commande complémentaires agissant de même, ladite source de courant reçoive une tension moyenne modulée selon ledit signal de modulation.

De préférence enfin, chacun desdits dispositifs de commande complémentaires reçoit d'un dispositif de commande complémentaire voisin un signal de modification établi dans ce dernier et définissant une modification que ce dispositif de commande complémentaire voisin apporte à ladite position dans le temps dudit premier état de conduction de la cellule qui lui est associée, afin que ledit dispositif de commande complémentaire considéré modifie en conséquence ladite position dans le temps dudit premier état de conduction de la cellule qui lui est propre, dans un sens qui compense pour le condensateur associé à cette dernière cellule l'effet de ladite modification apportée dans la cellule voisine.

Additionnellement, chacun desdits dispositifs de commande complémentaires reçoit, outre ledit signal d'écart, une mesure du courant imposé par ladite source de courant et une constante exprimant la capacité d'un desdits condensateurs qui lui est associé, ainsi qu'une commande de variation de marche du convertisseur et calcule en conséquence une modification de la position dans le temps dudit premier état de conduction de la cellule associée à ce condensateur telle qu'elle engendre aux bornes de ladite source de courant une variation de tension moyenne répondant à ladite commande.

Les différents objets et caractéristiques de la présente invention apparaîtront plus clairement dans la description qui va suivre de modes de mise oeuvre de l'invention, donnée à titre d'exemple non limitatif, en se reportant aux figures annexées qui représentent :
- la figure 1, déjà décrite, le schéma de principe d'un convertisseur multiniveaux connu
- la figure 2, déjà décrite, le schéma de principe d'un ensemble de deux étages imbriqués du convertisseur multiniveaux de la figure 1,
- la figure 3, déjà décrite, des formes d'ondes décrivant le fonctionnement du convertisseur multiniveaux des figures 1 et 2, dans le cas où il comprend trois étages,
- la figure 4, le schéma de principe de moyens de commande d'un convertisseur multiniveaux du type des figures 1, 2 et 3, agencés pour permettre la mise en oeuvre de l'invention,
- la figure 5, des courbes illustrant la mise en oeuvre de l'invention, conformément aux dispositions de la figure 4 et à propos d'une cellule de convertisseur multiniveaux quelconque, telle que celle de la figure 2, dans le cadre d'une application au maintien de la charge moyenne des condensateurs du convertisseur,
- la figure 6, le schéma de principe de moyens d'évaluation de tension de charge de condensateur utilisables dans le dispositif de la figure 4,
- la figure 7, un schéma de principe d'une variante d'une partie des moyens de la figure 4, correspondant au cas où la tension moyenne de charge de chacun des condensateurs du convertisseur multiniveaux est dérivé de la connaissance de la tension aux bornes de chacun des interrupteurs, lorsqu'ils sont ouverts,
- la figure 8, des courbes semblables à celles de la figure 5, illustrant la mise en oeuvre de l'invention, conformément aux dispositions de la figure 4 et à propos d'une cellule de convertisseur multiniveaux quelconque, telle que celle de la figure 2, dans le cadre d'une application à la réduction de la constante de temps du convertisseur;
- la figure 9, semblable à la figure 4, le schéma de principe de moyens de commande d'un convertisseur multiniveaux du type des figures 1, 2 et 3, agencés pour permettre la mise en oeuvre de l'invention, incorporant un dispositif de commande centralisé,
- la figure 10, une représentation semblable à celle de la figure 5 des impulsions que produisent les étages d'un convertisseur à 7 étages dans un cas où, sur un période de découpage du convertisseur, des inégalités de charge des condensateurs produisent une ondulation de la tension de sortie de fréquence double de la fréquence de découpage du convertisseur,
- la figure 11, une représentation semblable à celle de la figure 10, mais dans laquelle, grâce à un réarrangement du fonctionnement des différents étages, la fréquence de l'ondulation produite par les mêmes inégalités de charge des condensateurs devient égale à la fréquence de découpage du convertisseur,
- la figure 12, une représentation vectorielle du mode de fonctionnement de convertisseur déjà illustré par la figure 10, faisant apparaître que la tension résultante à la fréquence de découpage du convertisseur est d'amplitude relativement faible,
- la figure 13, une représentation vectorielle du mode de fonctionnement de convertisseur déjà illustré par la figure 11, faisant apparaître que, grâce à un réarrangement de la séquence de fonctionnement des étages du convertisseur, la tension résultante à la fréquence de découpage du convertisseur est d'amplitude relativement forte,
- la figure 14, le schéma du convertisseur de la figure 1 auquel est adjointe une charge accordée CR pour favoriser le rééquilibrage des tensions des condensateurs du convertisseur dans le cas de fonctionnement illustré par la figure 13.

On ne reviendra pas sur la description d'un convertisseur multiniveaux. Les schémas des figures 1, 2 et 3 correspondent à un convertisseur du type décrit dans le document de brevet FR - 2 697 715 A1 auquel le lecteur est renvoyé pour de plus amples détails.

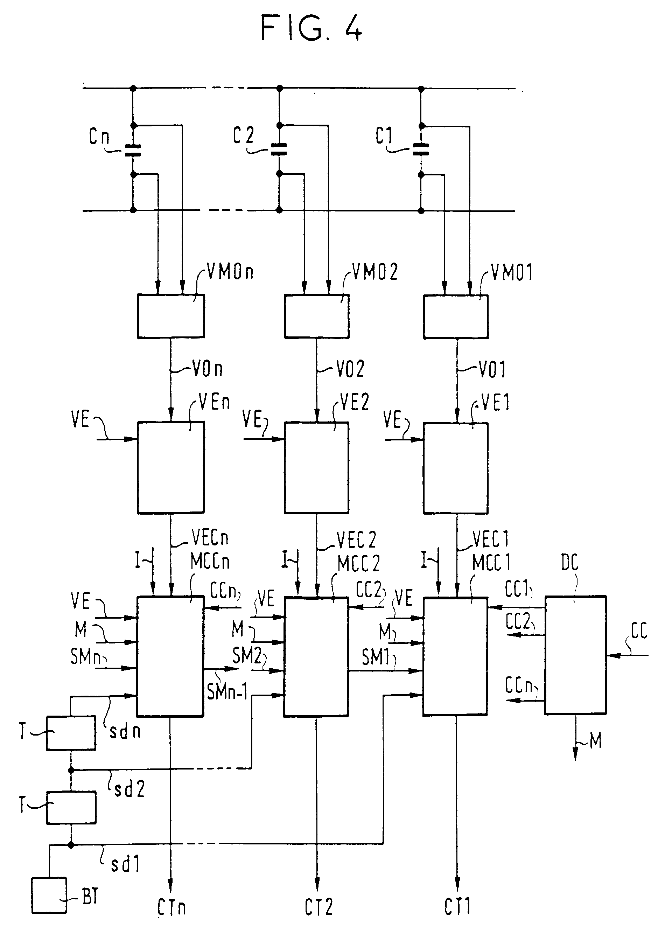

La figure 4 ne représente du convertisseur de la figure 1, que les condensateurs C1, C2..., Cn.

A chacun de ces condensateurs est associé, selon l'invention, un dispositif d'évaluation VMO1, VMO2..., VMOn contenant des moyens permettant d'évaluer la tension de charge moyenne de chacun des condensateurs. A cette fin, ce dispositif est couplé aux deux bornes du condensateur. Il fournit un signal d'évaluation VO1, VO2..., VOn exprimant la tension de charge moyenne existant aux bornes du condensateur.

A chacun des condensateurs est également associé, selon l'invention, un dispositif de constation d'écart VE1, VE2..., VEn contenant des moyens permettant de constater un écart éventuel entre la tension de charge moyenne observée, qu'il reçoit du dispositif d'évaluation correspondant, et la tension de charge moyenne nominale de ce condensateur. Ce dispositif de constatation d'écart calcule lui-même la tension de charge moyenne nominale de ce condensateur, qui est la fraction 1/n, n étant le nombre d'étages du convertisseur, de la tension VE de la source de tension SE, multipliée par le rang R de l'étage. Ce dispositif reçoit donc la valeur VE, tandis que les valeurs n et R, qui sont des constantes, sont câblées dans chaque dispositif. Ce dernier en dérive la tension de charge moyenne nominale VE.R/n et la compare à la tension de charge moyenne évaluée pour fournir un signal d'écart VEC1, VEC2..., VECn, caractérisant la différence entre ces deux tensions.

Ce signal d'écart est destiné à agir sur des moyens de commande complémentaires inclus dans des modules de commande MCC1, MCC2..., MCCn. Ces modules de commande fonctionnent en réponse à des signaux de déclenchement sd1, sd2..., sdn qui leur sont fournis à chaque période telle que p1 (figure 3) par une base de temps BT, de façon décalée, pour la commande décalée des cellules de commutation du convertisseur, et leur fonction primaire est de produire, au cours de chaque période, une impulsion de commande dont la durée nominale est déterminée par la valeur du signal de modulation ou modulante M, issu d'un dispositif de commande de marche DC. Ils produisent ainsi des impulsions de commande CT1, CT2...CTn dont la largeur est modulée de la façon illustrée par les lignes T1, T2, T3 de la figure 3. Lesdits moyens complémentaires des modules de commande MCC1, MCC2..., MCCn apportent secondairement une modification à la position dans le temps de cette impulsion qui dépend de la valeur du signal d'écart VEC1, VEC2..., VECn, ainsi que du courant I imposé par la source de courant. Lesdits moyens complémentaires des modules de commande MCC1, MCC2..., MCCn apportent encore, de préférence, une modification à la position dans le temps de cette impulsion qui dépend de celle qui est apportée à sa propre impulsion de commande par un module de commande voisin et qui lui est signalée par un signal de modification SM1, SM2..., SMn que produit chacun des modules de commande MCC1, MCC2..., MCCn. Dans l'exemple de la figure 4, le signal SM1 est produit par le module de commande MCC2, le signal SM2 par un module MCC3 non représenté. On a figuré un signal SMn pour le module de commande MCCn, pour des raisons d'homogénéité, mais il n'existe pas, dans la mesure où il n'existe pas de module de commande MCCn+1. Lesdits moyens complémentaires des modules de commande MCC1, MCC2..., MCCn apportent enfin une modification à la position dans le temps de cette impulsion qui dépend d'un signal de commande de marche CC1, CC2..., CCn issu du dispositif de commande de marche DC déjà mentionné, lui-même soumis à une commande de marche CC. On discutera de ce dernier aspect à la fin de la présente description seulement. Les signaux résultants CT1, CT2..., CTn commandent l'état des interrupteurs dans les cellules de commutation correspondantes CL1, CL2..., CLn.

Plus précisément, le signal d'écart retardera (ou avancera) les états "1" de l'interrupteur correspondant T1, T2..., Tn (voir figure 1), par rapport à une position nominale définie à partir de celle du signal de déclenchement sd1, sd2..., sdn. Plus précisément encore, dans cette première forme de mise en oeuvre de l'invention, une telle modification de position dans le temps du fonctionnement d'étages du convertisseur aura lieu sans modification de l'ordre selon lequel fonctionnent successivement les étages du convertisseur. Cette modification de la position dans le temps de l'impulsions de commande de l'interrupteur dépendra de l'écart de charge à corriger, mais aussi du courant dans la source de courant I, mesuré par un capteur de courant de type classique inséré en série avec la source de courant, ainsi que de la capacité du condensateur qui est une constante câblée dans le module de commande complémentaire.

Elle dépendra en outre de la position dans le temps conférée à l'impulsion de commande voisine, en application de ce qui a été expliqué précédemment, à savoir que "le condensateur C1 reçoit des charges additionnelles positives par le même courant qui fournit des charges additionnelles négatives au condensateur C2". Donc, par exemple, l'avancement de l'impulsion de commande CT2, qui rend passant le commutateur T2, ce qui charge positivement le condensateur C1 et négativement le condensateur C2, apporte une charge négative additionnelle souhaitable au condensateur C2, en même temps qu'une charge positive additionnelle indésirable au condensateur C1. Cet avancement est donc indiqué au module de commande MCC1 par le signal SM1 qui est utilisé pour corriger la position dans le temps du signal de commande CT1 dans un sens tel que soit corrigée la charge positive additionnelle indésirable mentionnée (avant qu'elle se soit produite).

Bien entendu, le sens de telles corrections de proche en proche sera inversé dans les cas où l'influence des variations de charge d'un condensateur sur l'autre a lieu dans l'autre sens.

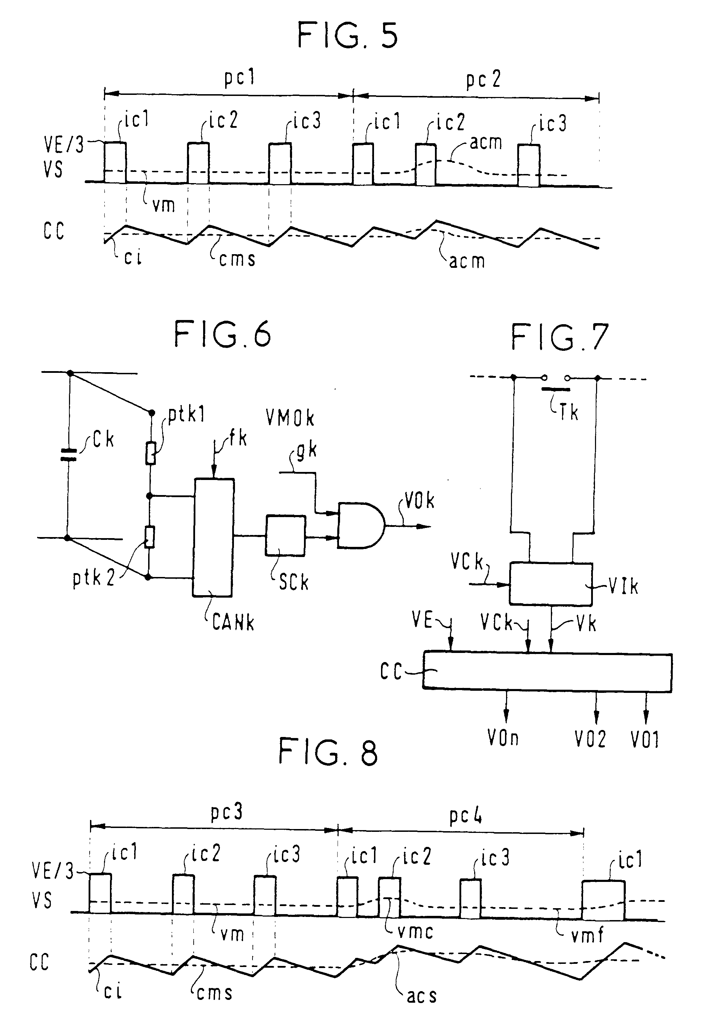

La figure 5 illustre le mode d'action des dispositions que l'on vient de décrire. A l'instar de l'exemple de fonctionnement de la figure 3, on y représente en VS la tension appliquée par le convertisseur à la source de courant, dans laquelle on retrouve des périodes de convertisseurs cycliquement répétées pc1, pc2..., contenant chacune trois impulsions, ic1, ic2, ic3, chacune provenant de l'un des étages d'un convertisseur à trois étages et délimitée par une impulsion de commande correspondante. En CC on a représenté le courant dans la source de courant et, par conséquent, dans les étages du convertisseur. On considérera ici le cas d'une source de courant inductive, dans laquelle le courant varie, certes lentement, en raison de la tension appliquée à la source de courant. Bien entendu, ces variations on été amplifiées sur la figure, afin de la rendre plus lisible.

Dans la partie de gauche de la figure, période de découpage du convertisseur pc1, les impulsions ici, ic2, ic3 sont situées au tout début, au premier tiers et au deuxième tiers de la période, ce qui correspond à leurs positions nomimales respectives. Dans l'exemple de fonctionnement considéré, où ces impulsions sont courtes et ne se recouvrent pas, l'amplitude de ces impulsions, vues aux bornes de la source de courant, de la sortie du convertisseur par exemple, est égale à VE/3. La tension moyenne fournie, représentée en pointillé, est ainsi égale à vm. Le courant ci dans la source de courant augmente pendant les impulsions de la tension de sortie et diminue entre elles, sa valeur moyenne cms, représentée en pointillé, restant constante.

Dans la partie de droite de la figure 5, période de découpage du convertisseur pc2, si la première impulsion ici et la troisième impulsion ic3 ont conservé leurs positions nominales respectives, l'impulsion ic2 a été avancée par rapport à la sienne. De ce fait, la valeur moyenne de la tension de sortie manifeste un accroissement temporaire indiqué en acm. De même le courant ci manifeste un accroissement temporaire acm.

Durant le temps où l'interrupteur T2 (voir figure 1) est conducteur, cet accroissement temporaire de courant augmente la charge du condensateur C1 et diminue celle du condensateur C2, par rapport à ce que produirait le courant ci maintenu à sa valeur moyenne cms. Une telle action permet donc de diminuer la charge du condensateur C2, présumée excessive.

Dans le cas de fonctionnement considéré ici, cette action a donc été causée par un signal d'écart VEC2 non nul. Le module de commande MCC2 a en conséquence décalé l'impulsion de commande CT2 de manière à engendrer le déplacement de l'impulsion ic2 de la période pc2 indiqué sur la figure. Le déplacement en question est de sens et d'amplitude tel qu'il réduise substantiellement, voir annule complètement l'écart de charge qui est à son origine.

Cette action a par ailleurs aussi pour conséquence une augmentation correspondante de la charge du condensateur C1. Cela nécessite une action corrective relative à ce condensateur, par décalage de l'impulsion de commande du commutateur T1. Cette action corrective pourrait avoir lieu lors d'une période de fonctionnement ultérieure du convertisseur. Selon une forme de réalisation préférée, elle est introduite dans la même période de découpage du convertisseur, du fait que chaque module de commande reçoit du module voisin un signal de correction SM1, SM2... SMn caractérisant la correction effectuée par ce module et permettant à celui qui le précède de prévoir une correction opposée destinée à la contre-balancer.

Bien entendu, ce qui précède, qui vient d'être illustré par la figure 5 et décrit dans le cas d'impulsions de commande ou d'impulsions de tension fournies par le convertisseur relativement courtes et détachées les unes des autres, s'applique tout aussi bien dans le cas d'impulsions longues telles que celles qui sont représentées sur la droite dans la figure 3.

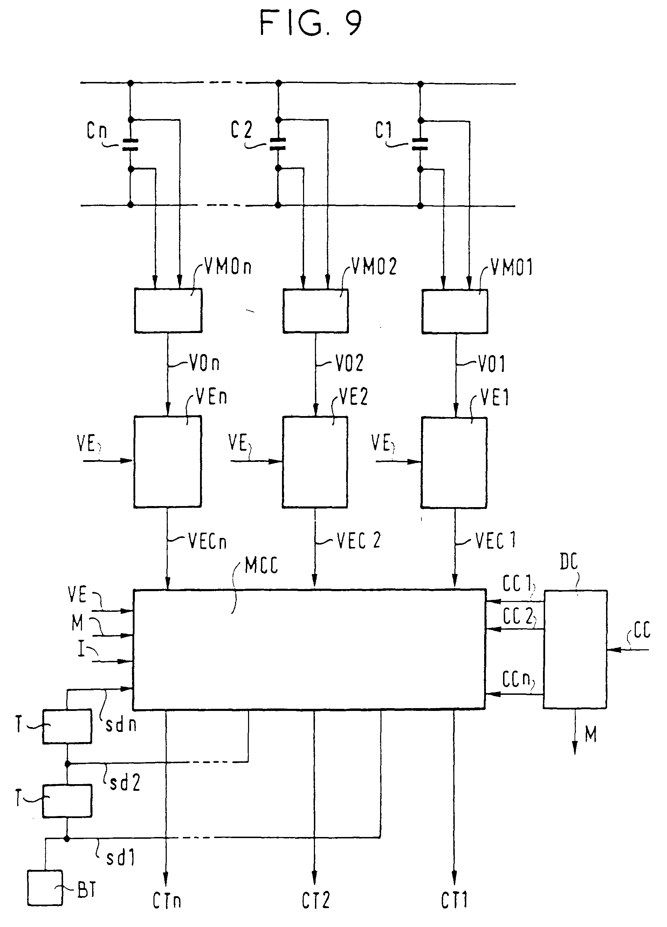

Par ailleurs, et selon une variante, la correction des écarts de charge des condensateurs peut être prévue dans un dispositif de commande centralisé réalisant les fonctions de tous les modules de commande MCC1, MCC2..., MCCn. Un tel dispositif de commande centralisé MCC est représenté à la figure 9, par ailleurs identique à la figure 4. En variante, on peut prévoir un dispositif réunissant tous les modules de commande MCC1, MCC2..., MCCn, complétés par des interconnexions et des moyens de coordination entre modules, capable donc de prévoir la ou les corrections initiales à apporter au fonctionnement d'un ou de plusieurs étages du convertisseur, ainsi que les corrections subséquentes correspondantes.

Dans un mode de réalisation simple, un tel dispositif maintiendrait la position dans le temps de l'impulsions de commande du premier étage d'interrupteurs, par exemple, et corrigerait tout écart observé par modification de la position dans le temps des impulsions de commande des autres étages, selon ce qui précède. On peut tout aussi bien envisager de maintenir la position nominale de l'impulsion de commande du dernier étage.

Dans ces conditions, l'homme de métier comprendra aisément qu'il est possible, en apportant ainsi une correction d'ensemble affectant tous les étages sauf un, selon le mécanisme décrit plus haut, d'ajuster la dernière commande pour faire en sorte que l'ensemble des corrections n'ait pas d'effet sur la source de courant, la tension moyenne fournie à la source de courant restant constante et seule l'énergie prélevée sur la source de tension étant modifiée, par accroissement ou réduction de cette énergie prélevée, puis répartition sur les différents étages grâce au mécanisme de correction que l'on vient de décrire.

Le dispositif décrit dans ce qui précède permet ainsi de moduler les positions dans le temps des impulsions de commande des interrupteurs Tk pour que la tension moyenne de chaque condensateur Ck soit à tout instant la plus proche possible de sa tension de charge nominale.

Cette tension de charge nominale, comme on l'a déjà vu, correspond à une fraction de la tension VE de la source de tension (cf. figure 1) qui dépend du rang k de l'étage considéré.

La tension de charge moyenne du condensateur est donc évaluée de façon cohérente avec ce qui précède, dans un dispositif d'observation VMO1, VMO2..., VMOn, soit VMOk en général.

En se basant sur ce qui précède, et en se reportant à la figure 6, ce dispositif sera composé, selon une forme de mise en oeuvre, d'impédances ptk1 et ptk2, connectées en série entre les bornes du condensateur Ck, et fournissant une fraction déterminée de la tension aux bornes de ce condensateur à un convertisseur analogique-numérique CAN fournissant à chaque impulsion fk une valeur numérique de tension à un circuit de calcul de moyenne SCk, lequel est lu une fois par cycle du convertisseur, par un circuit de porte PVk déclenché par un signal gk. Les signaux fk et gk seront avantageusement produits par la base de temps BT (figure 4) et leur position dans la période de fonctionnement du convertisseur sera telle que, après m mesures de tension dans la période de fonctionnement du convertisseur et calcul de la moyenne des résultats de cette mesure, la valeur de la tension de charge moyenne observée soit disponible sur la sortie VOk du circuit SCk, une fois par cycle du convertisseur, au moment opportun pour déterminer, dans les modules de commande MMC1, MMC2..., MMCn, la modification décrite en relation avec la figure 4 de la position dans le temps de l'état de conduction approprié (conduction de l'interrupteur Tk dans ce qui précède) de la cellule correspondante.

Il est bien évident que la charge moyenne observée du condensateur Ck peut être obtenue par d'autres moyens.

Selon une première variante, illustrée par la figure 7, plutôt que de mesurer la tension aux bornes du condensateur Ck, on mesure la tension VE de la source de tension, et la tension entre les bornes d'un des interrupteurs de chaque cellule, afin d'établir, par soustraction, et de proche en proche, la tension de charge moyenne de chacun des condensateurs du convertisseur multiniveaux. C'est ainsi que la figure 7 représente l'un des interrupteurs du convertisseur multiniveaux de la figure 1, Tk, auquel est couplé un circuit d'évaluation de tension VIk, qui peut être conforme à celui de la figure 6, moyennant des adaptations à la portée de l'homme de métier, lequel fournit un signal Vk caractérisant la tension aux bornes de l'interrupteur Tk à un circuit de calcul VCC, en même temps que celui-ci reçoit le signal de commande VCk de cet interrupteur Tk, ce qui permet au circuit de calcul de ne prendre en considération les valeurs fournies par le circuit d'évaluation VIk que pendant les périodes où l'interrupteur est bloqué. Le circuit de calcul reçoit directement la tension VE, qui peut être obtenue, elle-aussi, par un circuit tel que celui de la figure 6, judicieusement simplifié, et il opère le calcul soustractif qui fournit les signaux VO1, VO2..., VOn de la figure 4.

Selon une autre variante, qui se déduit aisément de la figure 3, la mesure de l'amplitude des impulsions fournies à la source de courant I représente la tension aux bornes du condensateur qui leur donne naissance ; un seul dispositif tel que celui de la figure 6, connecté aux bornes de la source de courant C, et évaluant la tension en différents points de la courbe VI de la figure 3, au cours de chaque période, telle que p1, voit apparaître des niveaux vi1, vi2, vi3 issus de chacun des condensateurs. L'homme de métier comprendra aisément comment on peut en dériver les signaux VO1, VO2..., VOn de la figure 3 représentant la charge moyenne évaluée de chacun des condensateurs du convertisseur multiniveaux.

Il reste à revenir sur la description de la figure 4 et en particulier sur le dispositif de commande de marche DC qui, en réponse à une commande de marche CC, fournit des signaux de commande de marche CC1, CC2..., CCn lesquels, dans chacun des modules de commande MCC1, MCC2..., MCCn apportent une modification à la position dans le temps des impulsions de commande CT1, CT2..., CTn.

On a vu, en se reportant à la figure 3, que le convertisseur de l'invention pouvait, en réponse à une modulante M, fournir une tension de sortie d'allure sinusoïdale à la source de courant. Bien entendu, le convertisseur de l'invention peut fournir une tension de sortie d'allure différente, dans certaines limites tout au moins. En effet, comme il a été exposé dans la description relative à la figure 3, le mode nominal de fonctionnement du convertisseur prévoit des périodes de découpage du convertisseur durant lesquelles les différents étages du convertisseur produisent chacun une impulsion, les impulsions de ces étages étant équidistantes et toutes d'une même longueur. Le mécanisme de régulation de la charge des condensateurs du convertisseur décrit en se référant à la figure 5 joue sur la position des impulsions. Si l'on fait abstraction de ce mécanisme, dont l'effet sur la position des impulsions devrait être généralement modéré, du fait que la dérive de la charge des condensateurs devrait en pratique être lente et du fait qu'il permet d'y répondre rapidement, on voit donc que la réponse du convertisseur à une commande de changement de marche a lieu avec retard, par prise en compte d'une nouvelle valeur de la modulante M au début de la période de découpage du convertisseur suivante. Cela est d'ailleurs souhaitable, car un changement de marche en cours de période, allongeant fortement par exemple l'impulsion vi2 de la figure 3, engendrerait immédiatement un déséquilibre de charge des condensateurs qui pourrait être préjudiciable aux interrupteurs.

L'invention permet donc, additionnellement, de répondre à une commande de changement de marche sans attendre le début de la période de découpage du convertisseur suivante, c'est-à-dire plus rapidement que dans le cas de fonctionnement correspondant aux descriptions précédentes, comme on va le voir maintenant en se référant à la figure 8.

La figure 8 représente une période de découpage du convertisseur pc3 identique en tout point à la période de découpage du convertisseur pc1 de la figure 5, laquelle est suivie d'une période de découpage du convertisseur pc4 qui commence comme la période de découpage du convertisseur pc2 de la figure 5 par une impulsion ic1 ayant sa position nominale, le signal de commande de marche CC1 fournit par le dispositif de commande de marche DC étant inactif. Toutefois, suite à un changement soudain de la commande de marche CC, le dispositif de commande de marche, non seulement change la modulante M, mais encore rend actif les signaux CC2..., CCn, c'est-à-dire CC2 et CC3, dans l'exemple de fonctionnement de la figure 8. Dans le cas illustré par cette figure, les signaux CC2 et CC3 et le fonctionnement des modules de commande MMC1 à MMCn sont tels qu'ils avancent dans le temps de la même durée les impulsions ic2 et ic3 fournies à la charge. Dans un tel cas, les modules de commande ne tiennent pas compte des signaux de correction SM1, SM2..., SMn.

L'effet produit est illustré par la figure 8. La tension moyenne fournie à la sortie du convertisseur subit un accroissement temporaire vmc dû au rapprochement des impulsions ici et ic2, suivi d'un affaiblissement temporaire en fin de période, juste avant que le changement de valeur de la modulante en cause une augmentation durable. Le courant moyen subit un accroissement acs, avant qu'il ne s'établisse durablement à une valeur accrue. Globalement, la tension et le courant dans la charge augmentent dès la période pc4, c'est-à-dire sans attendre la période de découpage du convertisseur suivante. Cela apporte le gain en temps de réponse à une commande de changement de marche recherché.

Bien entendu, l'exemple que l'on vient de donner admet de nombreuses variantes. Le dispositif de commande DC peut comprendre des programmes plus ou moins élaborés de réponse aux ordres de changement de marche ; par exemple, à chaque allure dans le temps de la commande de marche CC peuvent correspondre des déplacements appropriés des impulsions de commande restantes de la période de découpage du convertisseur. En effet, dans le cas où le convertisseur alimente un actionneur quelconque, la tension et le courant de sortie du convertisseur procurant un couple d'actionnement, la réponse du dispositif de commande de marche DC devra tenir compte des caractéristiques de l'actionneur afin de lui fournir une alimentation électrique permettant au mieux de satisfaire à la commande de changement de marche.

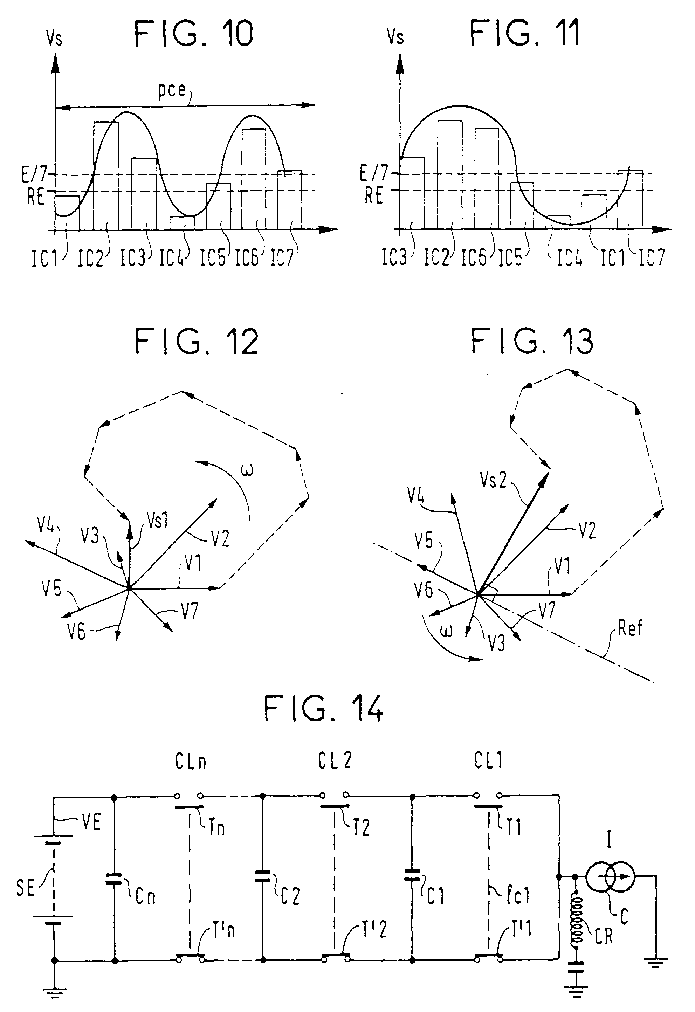

On va maintenant se tourner vers un deuxième mode de mise en oeuvre de l'invention, en se référant aux figure 10 à 13. Comme on va l'exposer plus en détail, la modification sur commande de la position dans le temps dudit premier état de conduction d'une ou plusieurs cellules n'est plus limitée à une avance ou un retard de ce premier état de conduction, sans changement dans l'ordre de fonctionnement des cellules du convertisseur. On va procéder à un changement dans l'ordre de fonctionnement des cellules du convertisseur pour faciliter le rééquilibrage spontané des tensions de charge des condensateurs. Il doit être compris que cette mesure peut soit remplacer, soit s'additionner à celle qui consiste à modifier la position dans le temps du fonctionnement des étages du convertisseur sans en changer l'ordre.

La figure 10 représente, en exagérant fortement les écarts pour faciliter la compréhension du phénomène, des impulsions Ici à IC7 issues des étages successifs d'un convertisseur à 7 étages, quand, tout à la fois, ces impulsions sont produites par le fonctionnement dans l'ordre numérique des étages du convertisseur, à l'instar des exemples de fonctionnement précédemment exposés, et ses impulsions sont modulées par des écarts de charge des condensateurs de ces étages successifs. Comme on l'a expliqué précédemment, la tension de sortie du convertisseur que l'on appellera Vs, est la somme de ces impulsions régulièrement décalées dans le temps. Si elles étaient toutes égales, la tension de sortie Vs serait constante. La figure 10 représente un exemple à cet égard qui se caractérise en ce que, durant la période de découpage du convertisseur pce, il se produit une modulation à deux fois la fréquence de fonctionnement du convertisseur (que l'on appellera fc et qui est l'inverse de la période pce). Bien entendu cette modulation peut prendre bien d'autres formes et engendrer des harmoniques à des fréquences multiples de la fréquence de découpage du convertisseur fc. Plus généralement, l'analyse par le développement en série de Fourier de la somme des impulsions de tensions issues des différents étages, fait apparaître que l'on est en présence d'une somme de vecteurs ayant des pulsations multiples de celle du convertisseur, comme ceux que représente la figure 12, laquelle est relative au premier multiple, c'est-à-dire celui qui correspond à fc. La somme de ces vecteurs Vs1 est d'amplitude relativement faible, ce qui représente le fait que des écarts de tensions erratiques ont tendance à se compenser, à la fréquence fc.

La figure 10 représente la tension aux bornes des interrupteurs bas du convertisseur, égale à E/7 au point nominal, soit un septième de la tension E alimentant le convertisseur et une tension RE qui est la tension moyenne Vs, pour des impulsions de la durée illustrée, si toutes les impulsions avaient l'amplitude E/7.

Parallèlement, la figure 11 représente les impulsions de la figure 10, dont l'ordre est modifié par un réarrangement visant à regrouper le fonctionnement des étages du convertisseur manifestant des écarts de charge de même sens. L'effet, comme on le voit à la figure 11 est par conséquent une modulation de la tension de sortie Vs par une onde ayant la fréquence de fonctionnement du convertisseur fc.

Tout aussi parallèlement, la figure 13 représente les vecteurs de la figure 12, dont l'ordre est modifié par un réarrangement visant à regrouper les vecteurs dont les modules sont voisins. L'effet, comme on le voit à la figure 13 est par conséquent une résultante Vs2 d'une amplitude augmentée par rapport au cas précédent.

Or, l'ondulation de la tension de sortie Vs, aux figures 10 et 11, tout comme la présence d'un vecteur Vs1 ou Vs2, aux figures 12 et 13, manifeste une tension perturbatrice ayant sa source dans les écarts de charge des condensateurs du convertisseur. L'invention consistant à opérer le réarrangement des figures 11 et 13 augmente cette tension perturbatrice, spécialement à la fréquence de découpage du convertisseur fc. Dans la mesure où cette tension cause un courant, ce courant va agir sur la charge des condensateurs dans un sens tel que les écarts de charge qui lui donnent naissance seront spontanément dissipés. Et, dans la mesure où le réarrangement consiste à renforcer l'amplitude de la tension de sortie perturbatrice, cela contribue à accélérer cette dissipation, donc la réduction des écarts de charge.

Le réarrangement que l'on vient d'illustrer à l'aide des figures 10 à 13 peut être aisément mis en oeuvre par un algorithme de commande approprié, exploitant, en les comparant et en les triant les tensions ou écarts de charge des condensateurs, dans un dispositif de commande centralisée tel que celui qui est représenté à la figure 9.

L'effet de ces mesures peut encore être accru en ajoutant au convertisseur de la figure 1, tel que le représente la figure 14, une charge accordée CR, inductance résistance et condensateur en série, ayant une impédance faible - quasi-nulle - à la fréquence de découpage du convertisseur fc. On comprendra que, quelle que soit la charge C, la charge accordée CR offrira un chemin à faible impédance au courant issu de la tension perturbatrice à la fréquence de découpage du convertisseur fc, donc favorisera le rééquilibrage des tensions de charge des condensateurs du convertisseur.

Par ailleurs, il va de soi que les mêmes mesures peuvent être appliquées en ce qui concerne des composantes de la tension perturbatrice aux fréquences multiples de la fréquence de découpage du convertisseur fc. Ces composantes peuvent être représentées par des diagrammes vectoriels semblables à celui de la figure 13 et il l'on peut apppliquer l'invention en ce qui les concerne, notamment en prévoyant une charge adaptée additionnelle, au côté de la chage adaptée CR de la figure 14.

Il est bien évident que les descriptions qui précèdent n'ont été données qu'à titre d'exemple limitatif et que les valeurs numériques, notamment, peuvent changer avec chaque application.

## Revendications

1. Convertisseur multiniveaux comprenant notamment, entre une source de tension (SE) et une source de courant (C) , une succession de cellules de commutation commandables (CL1, CL2..., CLn), chacune ayant deux interrupteurs (T1, T'1; T2, T'2...; Tn, T'n), avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule (CL1) étant connectée à ladite source de courant (C), tandis que la paire de pôles aval d'une dernière cellule (CLn) est connectée à ladite source de tension (SE), ce convertisseur comprenant encore un condensateur (C1, C2..., Cn), pour chaque cellule, sauf que celui de la dernière peut être omis quand ladite source de tension (SE) est apte à en jouer le rôle, connecté entre les deux pôles de la paire de pôles aval de la cellule, ainsi que des moyens de commande régissant le fonctionnement nominal du convertisseur en agissant sur les interrupteurs des cellules successives de sorte que les deux interrupteurs d'une même cellule soient toujours respectivement dans des états de conduction opposés, de sorte que, en réponse à un signal de commande de cellule (CT1, CT2..., CTn) fourni par lesdits moyens de commande, l'un des deux interrupteurs d'une même cellule soit successivement dans un premier état de conduction, puis dans un second état de conduction durant une période cycliquement répétée, et de sorte que, en réponse à des signaux de commande de cellules identiques mais décalés dans de temps d'une fraction de ladite période, les interrupteurs des cellules successives aient respectivement le même fonctionnement, mais décalé dans le temps de ladite fraction de période, les condensateurs successifs (C1,C2..., Cn) ayant nominalement des tensions de charge moyennes respectivement croissantes, la tension de charge moyenne nominale du condensateur de chacune desdites cellules étant égale au produit d'une tension (VE) issue de ladite source de tension (SE), par l'inverse du nombre de cellules et par le rang de la cellule, ledit convertisseur comprenant des moyens pour évaluer la tension moyenne aux bornes de chacun des condensateurs (C1,C2..., Cn) et pour constater un écart entre la tension de charge moyenne évaluée et la tension nominale, **caractérisé en ce qu'**il comprend des moyens de commande complémentaires adaptés pour modifier sur commande la position dans le temps dudit premier état de conduction d'une ou plusieurs cellules dans un sens tel que ledit écart constaté entre la tension de charge moyenne et la tension nominale soit réduit.

2. Convertisseur multiniveaux conforme à la revendication 1, **caractérisé en ce que**, ladite modification de la position dans le temps dudit premier état de conduction d'une ou plusieurs cellules s'effectue par avance ou retard de ce premier état de conduction, sans changement dans l'ordre de fonctionnement des cellules du convertisseur.

3. Convertisseur multiniveaux conforme à la revendication 1, **caractérisé en ce que** ladite modification de la position dans le temps dudit premier état de conduction d'une ou plusieurs cellules comprend un changement dans l'ordre de fonctionnement des cellules du convertisseur au cours d'une période de découpage du convertisseur, visant à regrouper le fonctionnement des étages du convertisseur manifestant des écarts de charges de même sens.

4. Convertisseur multiniveaux conforme à la revendication 3, **caractérisé en ce qu'**une charge de rééquilibrage est connectée en parallèle sur ladite source de courant, sous la forme d'une impédance série accordée sur la fréquence de découpage du convertisseur, afin d'augmenter le courant résultant de ladite composante perturbatrice globale.

5. Convertisseur multiniveaux conforme à l'une quelconque des revendications 1 à 4, **caractérisé en ce qu'**il comprend des moyens pour constater, pour chacun desdits condensateurs, un écart éventuel entre la tension de charge moyenne évaluée et la tension de charge moyenne nominale de ce condensateur, ainsi que des moyens de commande complémentaires modifiant la position dans le temps dudit premier état de conduction d'une ou plusieurs cellules du convertisseur dans un sens tel que ledit écart constaté soit réduit.

6. Convertisseur multiniveaux conforme à la revendication 2 et à la revendication 5 en ce qu'elle se réfère à la revendication 2, **caractérisé en ce qu'**il comprend des moyens pour constater, pour l'un desdits condensateurs, un écart éventuel entre la tension de charge moyenne évaluée et la tension de charge moyenne nominale de ce condensateur, ainsi qu'un dispositif de commande complémentaires modifiant la position dans le temps dudit premier état de conduction de la cellule du convertisseur contenant ce condensateur un sens tel que ledit écart constaté soit réduit.

7. Convertisseur multiniveaux conforme à la revendication 5, **caractérisé en ce que** lesdits moyens de constatation d'écart comprennent chacun des moyens pour recevoir la valeur de la tension de la source de tension, le rang de l'étage et le nombre d'étages, pour déterminer ce que doit être en conséquence la tension de charge nominale de chaque condensateur dans une période de fonctionnement du convertisseur, ledit écart étant alors constaté, pour chaque condensateur du convertisseur, par des moyens de comparaison soustrayant ladite tension moyenne évaluée aux bornes de chaque condensateur de ladite tension de charge nominale des condensateurs.

8. Convertisseur multiniveaux conforme à la revendication 5, **caractérisé en ce que** lesdits moyens d'évaluation de la tension aux bornes de chaque condensateur comprennent un réseau voltmétrique connecté entre les deux bornes du condensateur.

9. Convertisseur multiniveaux conforme à la revendication 5, **caractérisé en ce que** lesdits moyens d'évaluation de la tension aux bornes de chaque condensateur comprennent un réseau voltmétrique connecté entre les deux bornes d'un interrupteur de chaque cellule.

10. Convertisseur multiniveaux conforme à la revendication 5, **caractérisé en ce que** lesdits moyens d'évaluation de la tension aux bornes de chaque condensateur comprennent un réseau voltmétrique connecté entre les deux bornes de la source de courant.

11. Convertisseur multiniveaux conforme à l'une quelconque des revendications 6 à 10, **caractérisé en ce que** chacun desdits moyens de commande complémentaires reçoit, outre ledit signal d'écart, une mesure du courant imposé par ladite source de courant et une constante exprimant la capacité d'un desdits condensateurs qui lui est associé, et calcule en conséquence une modification de la position dans le temps dudit premier état de conduction de la cellule associée à ce condensateur telle qu'elle engendre dans ce condensateur une charge complémentaire compensant ledit écart de charge.

12. Convertisseur multiniveaux conforme à l'une quelconque des revendications 6 à 11, **caractérisé en ce que** chacun desdits moyens de commande complémentaires reçoit aussi un signal de modulation et modifie en conséquence la durée dudit premier état de conduction de la cellule associée à ce condensateur, de sorte que, tous lesdits moyens de commande complémentaires agissant de même, ladite source de courant reçoive une tension moyenne modulée selon ledit signal de modulation.

13. Convertisseur multiniveaux conforme à l'une quelconque des revendications 6 à 11, **caractérisé en ce que** chacun desdits moyens de commande complémentaires reçoit d'un moyen de commande complémentaire voisin un signal de modification établi dans ce dernier et définissant une modification que ce moyen de commande complémentaire voisin apporte à ladite position dans le temps dudit premier état de conduction de la cellule qui lui est associée, afin que ledit moyen de commande complémentaire considéré modifie en conséquence ladite position dans le temps dudit premier état de conduction de la cellule qui lui est propre, dans un sens qui compense pour le condensateur associé à cette dernière cellule l'effet de ladite modification apportée dans la cellule voisine.

14. Convertisseur multiniveaux conforme à l'une quelconque des revendications 6 à 12, **caractérisé en ce que** chacun desdits moyens de commande complémentaires reçoit, outre ledit signal d'écart, une mesure du courant imposé par ladite source de courant et une constante exprimant la capacité d'un desdits condensateurs qui lui est associé, ainsi qu'une commande de variation de marche du convertisseur et calcule en conséquence une modification de la position dans le temps dudit premier état de conduction de la cellule associée à ce condensateur telle qu'elle engendre aux bornes de ladite source de courant une variation de tension moyenne répondant à ladite commande.

## Claims

1. A multilevel converter comprising, in particular, between a voltage source (SE) and a current source (C), a succession of controllable switching cells (CL1, CL2, ..., CLn), each having two switches (T1. T'1; T2, T'2; ...; Tn, T'n), with one pole of each of the two switches forming part of a pair of upstream poles and the other pole of each of the switches forming part of a pair of downstream poles, the pair of downstream poles of an upstream cell being connected to the pair of upstream poles of a downstream cell, and the pair of upstream poles of a first cell (CL1) being connected to said current source (C), while the pair of downstream poles of a last cell (CLn) is connected to said voltage source (SE), the converter also comprising a respective capacitor (C1, C2, ..., Cn) for each cell, except that the capacitor of the last cell may be omitted when said voltage source (SE) is suitable for performing the same role, each capacitor being connected between the two poles constituting the pair of downstream poles of its cell, the converter also comprising control means governing the nominal operation of the converter and acting on the switches of the successive cells in such a manner that the two switches of any one cell are always in respective opposite conduction states, such that in response to a cell control signal (CT1, CT2, ..., CTn) delivered by said control means, one of the two switches in a given cell is successively in a first conduction state and then in a second conduction state during a cyclically repeated converter period, and such that in response to cell control signals that are identical but offset in time by a fraction of said period, the switches of successive cells function respectively in the same manner but offset in time by said fraction of a period, the successive capacitors (C1, C2, ..., Cn) having respective increasing nominal mean charge voltages, the nominal mean charge voltage of the capacitor in each of said cells being equal to the product of a voltage (VE) from said voltage source (SE) multiplied by the reciprocal of the number of cells and by the rank of the cell, said converter comprising means for evaluating the mean voltage across the terminals of each of the capacitors (C1, C2, ..., Cn) and for measuring a difference between the evaluated mean charge voltage and the nominal voltage, the converter being **characterized in that** it includes additional control means for changing, on command, the time position of said first conduction state of one or more cells in a direction such that said measured difference between the mean charge voltage and the nominal voltage is reduced.

2. A multilevel converter according to claim 1, **characterized in that** said change in the time position of said first conduction state of one or more cells is effected by advancing or retarding said first conduction state, without changing the operating order of the cells of the converter.

3. A multilevel converter according to claim 1, **characterized in that** said change in the time position of the said first conduction state of one or more cells includes a change in the operating order of the cells of the converter during a chopper period of the converter, aimed at grouping together operation of the stages of the converter that manifest same-direction charge differences.

4. A multilevel converter according to claim 3, **characterized in that** a rebalancing load is connected in parallel on said current source, in the form of a series impedance tuned to the chopper frequency of the converter, so as to increase the current resulting from said overall disturbing component.

5. A multilevel converter according to any one of claims 1 to 4, **characterized in that** it includes difference-measuring means for measuring, for each of said capacitors, any difference between the evaluated mean charge voltage and the nominal mean charge voltage of the capacitor, as well as additional control means for changing the time position of said first conduction state of one or more cells of the converter in a direction such that said measured difference is reduced.

6. A multilevel converter according to claim 2 and to claim 5 in that it refers to claim 2, said converter being **characterized in that** it includes difference-measuring means for measuring, for one of said capacitors, any difference between the evaluated mean charge voltage and the nominal mean charge voltage of the capacitor, as well as an additional control circuit for changing the time position of said first conduction state of the cell of the converter containing the capacitor in a direction such that said measured difference is reduced.

7. A multilevel converter according to claim 5, **characterized in that** each of the difference-measuring means includes means for receiving the value of the voltage of the voltage source, the rank of the stage and the number of stages so as to determine what the nominal charge voltage of each capacitor consequently ought to be in an operating period of the converter, said difference then being measured on each capacitor of the converter by comparator means subtracting said mean voltage evaluated across the terminals of each capacitor from said nominal charge voltage of the capacitor.

8. A multilevel converter according to claim 5, **characterized in that** said means for evaluating the voltage across the terminals of each capacitor comprise a voltmeter network connected across the two terminals of the capacitor.

9. A multilevel converter according to claim 5, **characterized in that** said means for evaluating the voltage across the terminals of each capacitor comprise a voltmeter network connected across the two terminals of a switch in each cell.

10. A multilevel converter according to claim 5, **characterized in that** said means for evaluating the voltage across the terminals of each capacitor comprise a voltmeter network connected across the two terminals of the current source.

11. A multilevel converter according to any one of claims 6 to 10, **characterized in that** each of said additional control means receives, in addition to said difference signal, a measurement of the current forced by said current source and a constant expressing the capacitance of one of said capacitors that is associated with it, and computes accordingly a change in the time position of said first conduction state of the cell associated with the capacitor, which change is such that it generates additional charge in the capacitor compensating for said charge difference.

12. A multilevel converter according to any one of claims 6 to 11, **characterized in that** each of said additional control means also receives a modulating signal, and changes accordingly the duration of said first conduction state of the cell associated with the capacitor, so that, with all of said additional control means acting likewise, said current source receives a mean voltage modulated according to said modulating signal.

13. A multilevel converter according to any one of claims 6 to 11, **characterized in that** each of said additional control means receives from an adjacent additional control means a change signal established therein and defining a change that the adjacent additional control means makes to said time position of said first conduction state of the cell associated with it, so that the additional control means in question changes accordingly said time position of said first conduction state of the cell specific to it, in a direction that compensates, in the capacitor associated with that cell, the effect of said change made in the adjacent cell.

14. A multilevel converter according to any one of claims 6 to 12, **characterized in that**, in addition to receiving said difference signal, each of said additional control means receives a measurement of the current forced by said current source and a constant expressing the capacitance of an associated one of said capacitors, as well as a converter mark-space ratio variation command, and it computes accordingly a change in the time position of said first conduction state of the cell associated with the capacitor, the change being such that it generates, across the terminals of said current source, a mean voltage variation that satisfies said command.

## Patentansprüche

1. Mehrniveau-Wandler, insbesondere mit
einer Folge von steuerbaren Schaltzellen (CL1, CL2, ..., CLn), von denen jede zwei Schalter (T1, T'1; T2, T'2; ...; Tn, T'n) aufweist, zwischen einer Spannungsquelle (SE) und einer Stromquelle (C), wobei ein Pol jedes der zwei Schalter ein vorderes Polpaar und der andere Pol jedes der Schalter ein hinteres Polpaar bildet, wobei das hintere Polpaar einer vorderen Zelle mit dem vorderen Polpaar einer hinteren Zelle verbunden ist und das vordere Polpaar einer vorderen Zelle (CL1) mit der Stromquelle (C) verbunden ist, wohingegen das hintere Polpaar einer letzten Zelle (CLn) mit der Spannungsquelle (SE) verbunden ist,
wobei der Wandler ferner einen Kondensator (C1, C2, ..., Cn) für jede Zelle mit Ausnahme der letzten, deren Kondensator fortgelassen sein kann, wenn die Spannungsquelle (SE) in der Lage ist, seine Funktion zu übernehmen, der zwischen die zwei Pole des vorderen Polpaars der Zelle geschaltet ist, sowie Steuermittel aufweist, die den Nominalbetrieb des Wandlers steuern durch Einwirken auf die Schalter der aufeinanderfolgenden Zellen derart, dass die zwei Schalter einer gleichen Zelle immer in entgegengesetzten Leitungszuständen sind, so dass in Reaktion auf ein von der Steuereinrichtung geliefertes Zellensteuersignal (CT1, CT2, CTn) während einer zyklisch wiederholten Periode der eine der zwei Schalter einer gleichen Zelle nacheinander in einem ersten Leitungszustand und dann in einem zweiten Leitungszustand ist, und so dass in Reaktion auf identische, aber um einen Bruchteil der Periode gegeneinander zeitversetzte Steuersignale die Schalter der aufeinanderfolgenden Zellen jeweils die gleiche Betriebsweise, allerdings um den Bruchteil der Periode zeitversetzt, haben, die aufeinanderfolgenden Kondensatoren (C1, C2, ..., Cn) nominell jeweils ansteigende mittlere Ladespannungen haben, wobei die nominelle mittlere Ladespannung des Kondensators jeder dieser Zellen gleich dem Produkt einer von der Spannungsquelle (SE) ausgegebenen Spannung (VE) mit dem Kehrwert der Zahl der Zellen und dem Rang der Zelle ist, wobei der Wandler Mittel zum Auswerten der mittleren Spannung an den Klemmen eines jeden der Kondensatoren (C1, C2, .., Cn) und zum Feststellen einer Abweichung zwischen der ausgewerteten mittleren Spannung und der nominellen Spannung umfasst,
**dadurch gekennzeichnet, dass**
er komplementäre Steuermittel umfasst, die eingerichtet sind, um auf Befehl die zeitliche Position des ersten Leitungszustandes einer oder mehrerer Zellen in einer solchen Richtung zu verändern, dass die festgestellte Abweichung zwischen der mittleren Ladespannung und der nominellen Spannung verringert wird.

2. Mehrniveau-Wandler nach Anspruch 1, **dadurch gekennzeichnet, dass** die Änderung der zeitlichen Position des ersten Leitungszustandes einer oder mehrerer Zellen durch Vor- oder Rückverschieben dieses ersten Leitungszustandes erfolgt, ohne Änderung in der Betriebsreihenfolge der Zellen des Wandlers.^

3. Mehrniveau-Wandler nach Anspruch 1, **dadurch gekennzeichnet, dass** die Änderung der zeitlichen Position des ersten Leitungszustandes einer oder mehrerer Zellen eine Änderung in der Betriebsreihenfolge der Zellen des Wandlers im Laufe einer Anschnittperiode des Wandlers mit dem Ziel umfasst, den Betrieb der Stufen des Wandlers, die Abweichungen in gleicher Richtung aufweisen, zusammenzufassen.

4. Mehrniveau-Wandler nach Anspruch 3, **dadurch gekennzeichnet, dass** an die Stromquelle eine Ausgleichslast in Form einer Reihenimpedanz parallel angeschlossen ist, die auf die Anschnittfrequenz des Wandlers abgestimmt ist, um den aus der Gesamtstörungskomponente resultierenden Strom zu verstärken.

5. Mehrniveau-Wandler nach einem der Ansprüche 1 bis 4, **dadurch gekennzeichnet, dass** er Mittel zum Feststellen, für jeden der Kondensatoren, einer eventuellen Abweichung zwischen der ausgewerteten mittleren Spannung und der mittleren nominellen Spannung dieses Kondensators sowie komplementäre Steuermittel umfasst, die die zeitliche Position des ersten Leitungszustandes einer oder mehrerer Zellen des Wandlers in einer solchen Richtung verschieben, dass die festgestellte Abweichung verringert wird.

6. Mehrniveau-Wandler nach Anspruch 2 und nach Anspruch 5, soweit auf Anspruch 2 rückbezogen, **dadurch gekennzeichnet, dass** er Mittel zum Feststellen, für jeden der Kondensatoren, einer eventuellen Abweichung zwischen der ausgewerteten mittleren Ladespannung und der mittleren nominellen Ladespannung dieses Kondensators sowie eine komplementäre Steuervorrichtung umfasst, die die zeitliche Position des ersten Leitungszustandes derjenigen Zelle des Wandlers, die den Kondensator enthält, in einer solchen Richtung verschiebt, dass die festgestellte Abweichung verringert wird.

7. Mehrniveau-Wandler nach Anspruch 5, **dadurch gekennzeichnet, dass** die Mittel zum Feststellen der Abweichung jeweils Mittel zum Empfangen des Wertes der Spannung der Spannungsquelle, des Rangs der Stufe und der Zahl der Stufen umfassen, um zu bestimmen, was in Konsequenz die nominelle Ladespannung jedes Kondensators in einer Betriebsperiode des Wandlers sein soll, wobei die Abweichung dann für jeden Kondensator des Wandlers durch Vergleichsmittel festgestellt wird, die die ausgewertete mittlere Spannung an den Klemmen jedes Kondensators von der nominellen Ladespannung jedes Kondensators subtrahieren.

8. Mehrniveau-Wandler nach Anspruch 5, **dadurch gekennzeichnet, dass** die Mittel zum Auswerten der Spannung an den Klemmen jedes Kondensators ein zwischen die zwei Klemmen jedes Kondensators geschaltetes Spannungsmessnetz umfassen.

9. Mehrniveau-Wandler nach Anspruch 5, **dadurch gekennzeichnet, dass** die Mittel zum Auswerten der Spannung an den Klemmen jedes Kondensators ein zwischen die zwei Klemmen eines Schalters jeder Zelle geschaltetes Spannungsmessnetz umfassen.

10. Mehrniveau-Wandler nach Anspruch 5, **dadurch gekennzeichnet, dass** die Mittel zum Auswerten der Spannung an den Klemmen jedes Kondensators ein zwischen die zwei Klemmen der Stromquelle geschaltetes Spannungsmessnetz umfassen.

11. Mehrniveau-Wandler nach einem der Ansprüche 6 bis 10, **dadurch gekennzeichnet, dass** jedes der komplementären Steuermittel außer dem Abweichungssignal eine Messung des von der Stromquelle aufgeprägten Stroms und eine Konstante empfängt, die die Kapazität eines der ihr zugeordneten Kondensatoren angibt, und in Konsequenz eine Veränderung der zeitlichen Position des ersten Leitungszustandes der diesem Kondensator zugeordneten Zelle so berechnet, dass sie in dem Kondensator eine komplementäre Ladung erzeugt, die die Ladungsabweichung kompensiert.

12. Mehrniveau-Wandler nach einem der Ansprüche 6 bis 11, **dadurch gekennzeichnet, dass** jedes der komplementären Steuermittel ferner ein Modulationssignal empfängt und in Konsequenz die Dauer des ersten Leitungszustandes der diesem Kondensator zugeordneten Zelle so verändert, dass wenn alle komplementären Steuermittel gleich wirken, die Stromquelle einen mit dem Modulationssignal modulierten Strom empfängt.

13. Mehrniveau-Wandler nach einem der Ansprüche 6 bis 11, **dadurch gekennzeichnet, dass** jedes der komplementären Steuermittel von einem benachbarten komplementären Steuermittel ein in letzterem erzeugtes Veränderungssignal empfängt, das eine Veränderung definiert, die dieses benachbarte Steuermittel an der zeitlichen Position des ersten Leitungszustandes der ihm zugeordneten Zelle vornimmt, so dass das betreffende komplementäre Steuermittel in Konsequenz die zeitliche Position des ersten Leitungszustandes der zu ihm gehörenden Zelle in einer Richtung verändert, die für den dieser letzteren Zelle zugeordneten Kondensator die Wirkung der an der Nachbarzelle vorgenommenen Veränderung kompensiert.

14. Mehrniveau-Wandler nach einem der Ansprüche 6 bis 12, **dadurch gekennzeichnet, dass** jedes der komplementären Steuermittel außer dem Abweichungssignal eine Messung des von der Stromquelle aufgeprägten Stroms und eine Konstante, die die Kapazität eines der ihr zugeordneten Kondensatoren angibt, sowie einen Betriebsänderungsbefehl des Wandlers empfängt und in Konsequenz eine Veränderung der zeitlichen Position des ersten Leitungszustandes der diesem Kondensator zugeordneten Zelle so berechnet, dass sie an den Klemmen der Stromquelle eine Veränderung der mittleren Spannung in Antwort auf den Befehl erzeugt.
